# EUROPEAN PATENT APPLICATION

(11) **EP 3 429 199 A2**
(43) Date of publication of application: **16.01.2019**
(21) Application number: 18179108.8
(22) Date of filing: 21.06.2018
(51) Int. Cl.: H04N 9/31

(54) **REMOTE SUPPORT SYSTEM**

(30) Priority: 23.06.2017 JP 2017122771
(71) Applicant: Westunitis Co., Ltd., Kita-ku Osaka-shi, Osaka 530-0011 (JP)
(72) Inventor: FUKUDA, Takahito, Osaka-shi, Osaka 5300011 (JP)
(74) Representative: J A Kemp

(57) **Abstract**

A support system capable of displaying an image at a specified position of a projection target is provided. An image captured by a Capturing device 13 is sent to a support-side device 30. The received captured image is displayed on a CAPTURED IMAGE DISPLAY DEVICE 24. While looking at a screen in the CAPTURED IMAGE DISPLAY DEVICE 24, a supporter operates a SUPPORT IMAGE INPUT DEVICE 26 and draws a circle around a switch 4c in the captured image. The support image (the image with the circle) is sent to a work-side device 10. The work-side device 10 receives the support image, and correction means 16 corrects the support image on the basis of an estimated positional relationship such that the support image is not distorted but is correctly displayed around the switch 4c when a Projection device 12 projects support image data. In this way, the support image intended by the supporter can be projected on the work side in real time.

## Description

### TECHNICAL FIELD

The invention relates to a remote support system using a projector, and the like.

### BACKGROUND ART

A system that projects an image onto an object surface or the like by a projector has been proposed. For example, such a system can be used for information presentation such as the display of jobs in a print queue or the display of estimated job completion time in an appropriate part of a printer device.

A system is disclosed in JP2006507713A. When displaying the image as described above, the system grasps a positional relationship between the projector and the object and executes control such that an undistorted image is displayed onto the object surface. Detecting a positional relationship (a distance, an angle, and the like) between the object surface and the projector, and correcting the projection image by the projector in accordance with this relationship, the system thereby projects the undistorted image onto the object surface.

### SUMMARY OF INVENTION

However, in the prior art as disclosed in JP2006507713A, in the case where the positional relationship between the projector and the object is dynamically changed, the image cannot stably be projected onto the object surface. Accordingly, it is difficult to use such a system for a case where the projector that is placed on a moving object such as a human body displays an image of a work site, an information map, or the like.

The present invention has a purpose of solving the problems as described above and therefore providing a support system that can display an image onto a specified position of a projection target even when a positional relationship between a projector and the projection target is dynamically changed.

Several features of the invention, each of which is independently applicable, will be listed.
(1) A remote work support system according to the invention is a remote work support system that includes a support-side device and a work-side device.
   The work-side device includes: a Capturing device that is attached to a movable object or a fixed object, captures an image of a work target area, and generates a captured image; captured image sending means that causes a sending section to send the captured image to the support-side device; a Projection device that is attached to the movable object or the fixed object and projects a support image onto the work target area on the basis of provided support image data; and correction means that corrects the support image data on the basis of one of or both of an image of a marker provided in the work target area and a characteristic point of the work target area included in the captured image such that the support image is displayed with a specified portion of the work target area being a reference, the image of the marker being included in the captured image.
   The support-side device includes: captured image reception means that causes a reception section to receive the sent captured image; a CAPTURED IMAGE DISPLAY DEVICE that displays the received captured image; a SUPPORT IMAGE INPUT DEVICE that inputs the support image at a desired position in the work target area on the captured image displayed in the CAPTURED IMAGE DISPLAY DEVICE; and support image sending means that causes a sending section to send the support image data, the position of which on the captured image is identified, to the work-side device.
   Accordingly, even in the cases where the support image is sent remotely and the Projection device and/or a target object moves, the support image can appropriately be displayed at a designated position in the work target area.
(2), (3) A work-side device according to the invention is a work-side device for a remote work support system and includes: a Capturing device that is attached to a movable object or a fixed object, captures an image of a work target area, and generates a captured image; captured image sending means that causes a sending section to send the captured image to a support-side device; a Projection device that is attached to the movable object or the fixed object and projects a support image onto the work target area on the basis of provided support image data; and correction means that corrects the support image data on the basis of one of or both of an image of a marker provided in the work target area and a characteristic point of the work target area included in the captured image such that the support image is displayed with a specified portion of the work target area being a reference, the image of the marker being included in the captured image.
   Accordingly, even in the cases where the support image is sent remotely and the Projection device and/or a target object moves, the support image can appropriately be displayed at a designated position in the work target area.
(4), (5) A support-side device according to the invention is a support-side device for a remote work support system having, on a work-side: a Capturing device that is attached to a movable object or a fixed object, captures an image of a work target area, and generates a captured image; and a Projection device that is attached to the movable object or the fixed object and projects a support image onto the work target area on the basis of provided support image data. The support-side device includes: captured image reception means that causes a reception section to receive the sent captured image; a CAPTURED IMAGE DISPLAY DEVICE that displays the received captured image; a SUPPORT IMAGE INPUT DEVICE that inputs the support image at a desired position in the work target area on the captured image displayed in the CAPTURED IMAGE DISPLAY DEVICE; and support image sending means that causes a sending section to send the support image data, the position of which on the captured image is identified, to a work-side device so that the Projection device projects the support image, which is input by the SUPPORT IMAGE INPUT DEVICE, onto the work target area on the work side.
   Accordingly, even in the cases where the support image is sent remotely and the Projection device and/or a target object moves, the support image can appropriately be displayed at a designated position in the work target area.
(6), (7) An information presentation system according to the invention includes: a Capturing device that is attached to a movable object or a fixed object, captures an image of a projection target, and generates a captured image; a Projection device that is attached to the movable object or the fixed object and projects a projection image onto the projection target on the basis of provided projection image data; and correction means that corrects the projection image data on the basis of an image of a marker provided in the projection target or a characteristic point of the projection target included in the captured image such that the projection image is displayed with a specified portion of the projection target being a reference, the image of the marker being included in the captured image.
   Accordingly, even in the case where the Projection device and/or a target object moves, the projection image can be fixed to a desired position in the projection target and be displayed.
(8) In the system according to the invention, the correction means includes estimation means that estimates a positional relationship between the Projection device and either one of the marker and the characteristic point on the basis of the captured image of the marker or the characteristic point of the work target area, and corrects the support image data or the projection image data on the basis of the estimated positional relationship.
   Accordingly, the support image or the projection image can stably be displayed at a specified position on the basis of the estimated positional relationship.
(9) In the system according to the invention, the Projection device projects the captured image of the marker or the characteristic point in addition to the support image, and the correction means correct the support image data or the projection image data such that a projection image of the marker matches the actual marker or that a projection image of the characteristic point of the work target area matches the actual characteristic point.
   Accordingly, the support image or the projection image can stably be displayed at the specified position.
(10) The system according to the invention further includes support image selection means that retrieves the support image and provides the support image to the correction means, the support image being recorded in such a manner as to correspond to an element image included in the captured image.
   Accordingly, the support image can be displayed in such a manner as to correspond to the captured element.
(11) In the system according to the invention, the movable object is a part of a body of a user.
   Accordingly, even when the user moves or his/her body moves, the image can stably be displayed.
(12) In the system according to the invention, the Projection device is configured to include a laser projector, and, in the case where a person is present in the captured image, it is controlled such that the laser projector does not irradiate at least eyes of the person with laser.
   Accordingly, danger caused by the laser can reliably be prevented.
(13), (14) A surgery system according to the invention includes: a Projection device that projects an invisible light image onto a surgical site on the basis of provided invisible light image data showing inside of a body of a patient, the invisible light image showing the inside of the body of the patient; an invisible light image Capturing device that irradiates the surgical site with light other than visible light, captures an image of the surgical site, and generates the invisible light image that includes an invisible light image of a marker provided at the surgical site; a visible light image Capturing device that captures an image of the surgical site by the visible light and generates a visible light image at least including the marker projected by the Projection device and the actual marker provided at the surgical site; and correction means that corrects the invisible light image data on the basis of the visible light image such that, even when a positional relationship between the surgical site and the Projection device is changed in real time, the invisible light image of the inside of the body is displayed in such a manner as to match a position in the body at the surgical site.
   Accordingly, procedures or a surgical operation can be performed while the invisible light image is displayed on the body of the patient.
(15), (16) A surgery support system according to the invention includes: a Projection device that projects an invisible light image onto a surgical site on the basis of provided invisible light image data showing inside of a body of a patient, the invisible light image showing the inside of the body of the patient; an invisible light image Capturing device that irradiates the surgical site with light other than visible light, captures an image of the surgical site, and generates the invisible light image that includes an invisible light image of a marker provided at the surgical site; and correction means that corrects the invisible light image data on the basis of the invisible light image of the marker included in the invisible light image such that, even when a positional relationship between the surgical site and the Projection device is changed in real time, the invisible light image of the inside of the body is displayed in such a manner as to match a position in the body at the surgical site.
   Accordingly, procedures or a surgical operation can be performed while the invisible light image is displayed on the body of the patient. (17) In the surgical system according to the invention, the invisible light image is any one of a radiograph, a PET image, or a SPECT image, and the visible light image is a normal camera image.
   Accordingly, a medical image can be displayed in a corresponding portion of the body of the patient.
(18), (19) A display system according to the invention includes: a Capturing device that is attached to a movable object or a fixed object, captures an image of a projection target, and generates a captured image; a Projection device that is attached to the movable object or the fixed object and projects a projection image onto the projection target on the basis of provided projection image data; and correction means that finds a flat area with slight patterns in the projection target on the basis of the captured image and corrects the projection image data such that the projection image is displayed in the area.

Accordingly, the image can be displayed at a position with good visibility.

In the invention, the "Capturing device" is a section that captures the image of the target area and outputs the captured image, and used as a concept that includes not only the normal camera but also a device that takes the radiograph or the like.

In one of the embodiments, step S1 corresponds to the "captured image sending means".

The "Projection device" is a section that projects the image onto the target area, and is a concept that includes the laser projector, a normal projector, and the like.

In the embodiments, steps S4, S5, step S53, step S67, step S73, and the like each correspond to the "correction means".

In one of the embodiments, step S41 corresponds to the "captured image reception means".

The "SUPPORT IMAGE INPUT DEVICE" is a section that inputs the support image, and is a concept that includes a mouse, a touch pad, a touch screen, and the like.

In one of the embodiments, step S45 corresponds to the "support image sending means".

The "invisible light image" is an image generated by irradiation of the light such as X-ray, an electron, or infrared light and the like other than the visible light, and the image itself may be visible.

In one of the embodiments, a radiograph capturing device, a PET device, a SPECT device, and the like each corresponds to the "invisible light image Capturing device".

In one of the embodiments, a camera corresponds to the "visible light image Capturing device".

A "program" is a concept that includes not only a program directly executable by a CPU but also a source program, a compressed program, an encrypted program, and the like.

### BRIEF DESCRIPTION OF DRAWINGS

FIG. 1 is a functional configuration diagram of a remote support system according to a first embodiment of the invention;
FIG. 2 is a view of a state of the remote support system at a site;
FIG. 3 shows external appearance of a wearable computer 52;
FIG. 4 shows a hardware configuration of the wearable computer 52;
FIG. 5 shows a hardware configuration of a support-side device 30;
FIG. 6 is a flowchart of support processing;
FIG. 7 shows an example of a display screen of the support-side device;
FIG. 8 shows an example of the display screen including an annotation of the support-side device;
FIG. 9 shows data configuration of support data;
FIG. 10 includes views, each of which shows a relationship between an image on the support device side and an image displayed at the site;
FIG. 11 is a view of correction of an annotation image;
FIG. 12 is another view of the correction of the annotation image;
FIG. 13 is a view of positioning a marker image and a marker;
FIG. 13a is a view of an example in which a robot 150 is provided with a laser projector 12 and a camera 13;
FIG. 13b is a view of a unit 160 that has the laser projector 12 and the camera 13;
FIG. 14 is a functional configuration diagram of a surgery support system according to a second embodiment;
FIG. 15 is a view of a situation where the surgery support system is used;
FIG. 16 shows a hardware configuration of a computer 110;
FIG. 17 is a flowchart of a navigation program 132;
FIG. 18 is a functional configuration diagram of an information presentation system according to a third embodiment;
FIG. 19 is a view of a state where the information presentation system is used;
FIG. 20 is a flowchart of an information presentation program;
FIG. 21 shows data on corresponding relationships between an element image and a support image;
FIG. 22 is a functional configuration diagram of a display system according to a fourth embodiment;
FIG. 23 is a flowchart of a display program; and
FIG. 24 shows an example of a target area that is displayed on the display system.

### DESCRIPTION OF EMBODIMENTS

### 1. First Embodiment

### 1.1 System Functional Configuration

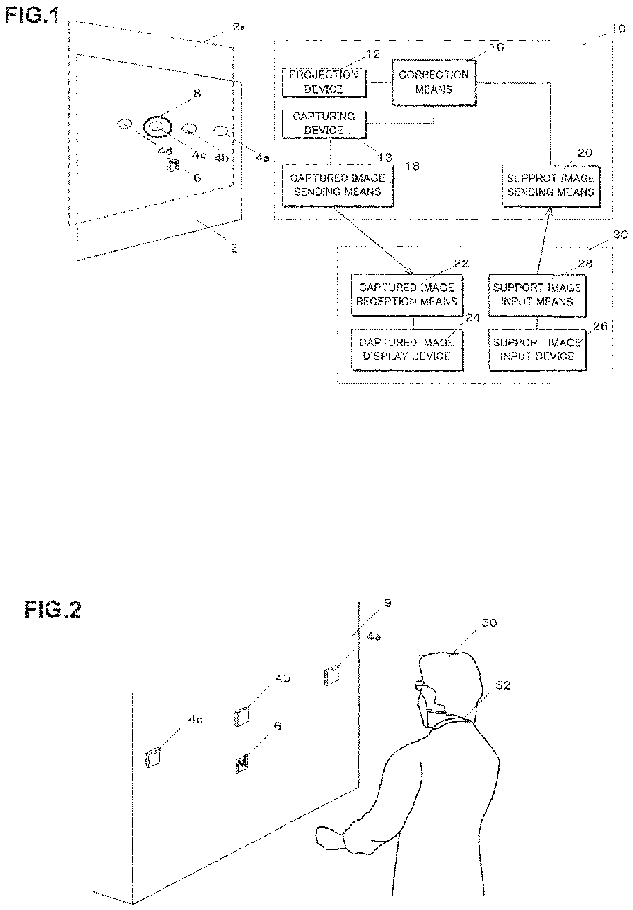

FIG. 1 shows a functional configuration of a navigation system according to a first embodiment of the invention. A description will herein be made on a case where a remote supporter supports work by a worker who visits a site for adjustment or repair of equipment.

A projection target is set to a surface of the equipment that is provided with switches 4a, 4b, 4c, 4d and the like, for example. A marker 6 is adhered to a portion of the equipment near the switches 4a, 4b, 4c, 4d. This marker 6 has plural characteristic points, and a positional relationship among the characteristic points is comprehended in advance. In addition, it is preferred that the plural characteristic points of the marker 6 be arranged asymmetrically in vertical and horizontal directions.

The worker near the equipment wears a work-side device 10. A Projection device 12 in the work-side device 10 projects an image onto the equipment on the basis of support image data from a support-side device 30. In the drawing, a projection area 2 is an area that is projected by the Projection device 12.

A Capturing device 13 captures an image of the projection area 2 that is projected by the Projection device 12. At this time, the marker 6 is also captured.

Correction means 16 estimates a positional relationship (a direction and a distance) between the Projection device 12 and the marker 6 on the basis of a captured image of the marker 6.

In addition, the image captured by the Capturing device 13 is sent to the support-side device 30 by captured image sending means 18.

Captured image reception means 22 in the support-side device 30 receives the image. A CAPTURED IMAGE DISPLAY DEVICE 24 displays the captured image that has been received. In this way, the remote supporter can recognize a situation observed by the worker through the image displayed on the CAPTURED IMAGE DISPLAY DEVICE 24.

The supporter supports the worker by voice communication (not shown). However, because the voice communication tends to be unclear, superior support is provided by projecting a support image onto the equipment.

For example, in the case where the supporter considers that the switch 4c on the equipment should be operated, the supporter looks at a screen in the CAPTURED IMAGE DISPLAY DEVICE 24 and operates a SUPPORT IMAGE INPUT DEVICE 26. Then, the supporter draws a circle around the switch 4c in the captured image. The SUPPORT IMAGE INPUT DEVICE 26 receives the drawing and sends the support image (the image with the circle) to the work-side device 10.

Support image reception means 20 in the work-side device 10 receives the support image and provides the support image to the correction means 16. The correction means 16 corrects the support image data on the basis of the previously estimated positional relationship such that the above circle is not distorted but is correctly displayed around the switch 4c when the Projection device 12 projects the support image data.

In this way, the support image intended by the supporter can be projected on the work side in real time.

It is assumed that the projection area 2 by the Projection device 12 moves to 2x due to movement of the worker. Also, in this case, the correction means 16 corrects the support image data such that the circle is displayed around the switch 4c without the distortion.

As it has been described so far, even when the worker moves and thereby the direction and the distance of the Projection device 12 in the worn work-side device 10 are changed, the circle is stably displayed around the switch 4c as intended by the supporter.

### 1.2 External Appearance and Hardware Configuration

FIG. 2 shows a worker 50 who wears a wearable computer 52 as the work-side device. When the worker 50 arrives in front of equipment 9 as a target of the work such as the repair or maintenance thereof, the worker 50 wears the wearable computer 52 on his/her neck.

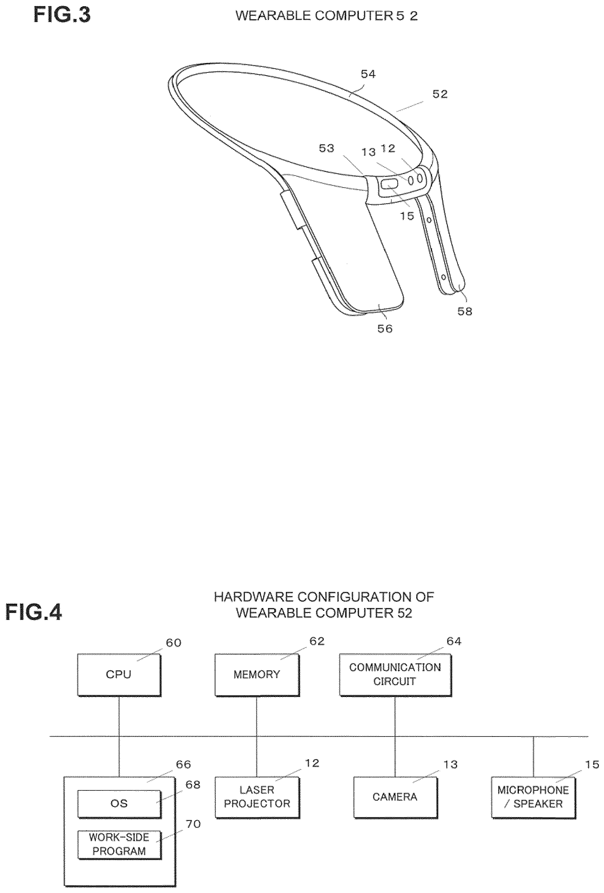

FIG. 3 shows the wearable computer 52. A connection section 53 of a ring 54 is detachable by a magnet. During attachment, the ring 54 is opened at the connection section 53, and the ring 54 is then closed after being worn around the neck. A laser projector 12 as the Projection device and a camera 13 as the Capturing device are provided at the front of the ring 54.

A battery and an electronic circuit such as a computer are accommodated in left and right body sections 56, 58.

FIG. 4 shows a hardware configuration of the wearable computer 52. Memory 62, a communication circuit 64, non-volatile memory 66, the laser projector 12, the camera 13, and a microphone/speaker 15 are connected to a CPU 60.

The communication circuit 64 is used to communicate with the support-side device 30 via the Internet. The non-volatile memory 66 stores an operating system 68 and a work-side program 70. The work-side program 70 exerts its function in cooperation with the operating system 68.

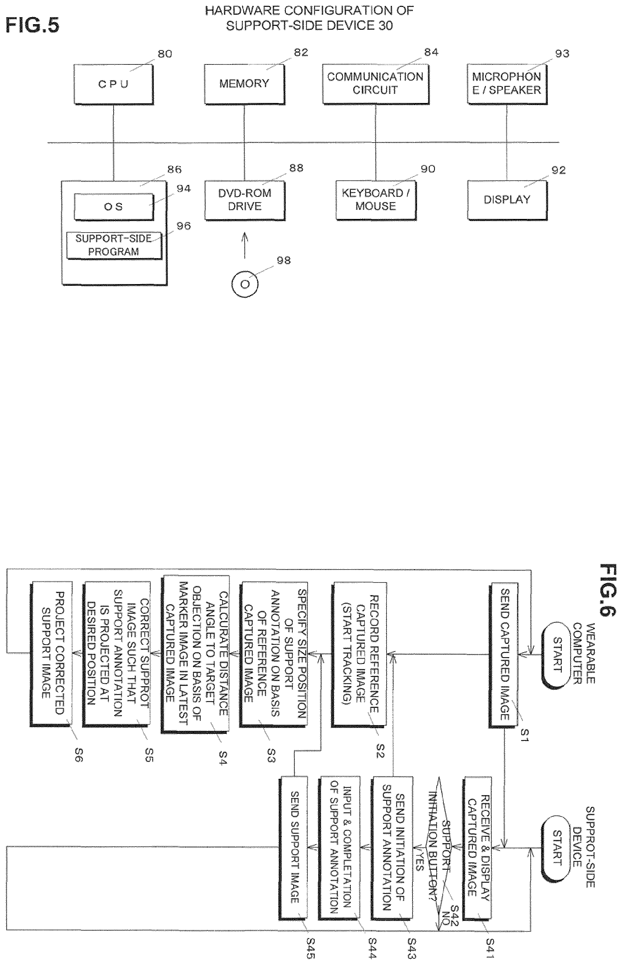

FIG. 5 shows a hardware configuration of the support-side device 30. Memory 82, a communication circuit 84, a hard disk 86, a DVD-ROM drive 88, a keyboard/mouse 90, a display 92, and a microphone/speaker 93 are connected to a CPU 80.

The communication circuit 84 is used to communicate with the wearable computer 52 via the Internet. The hard disk 86 stores an operating system 94 and a support-side program 96. The support-side program 96 exerts its function in cooperation with the operating system 94. These programs are recorded in a DVD-ROM 98 and are installed therefrom in the hard disk 86 via the DVD-ROM drive 88.

### 1.3 Remote Support Processing

FIG. 6 is a flowchart of the work-side program 70 and the support-side program 96 in remote support processing.

The CPU 60 in the wearable computer 52 (hereinafter may be abbreviated as the wearable computer 52) sends the image of the equipment captured by the camera 13 to the support-side device 30 via the communication circuit 64 (step S1). The CPU 80 in the support-side device 30 (hereinafter may be abbreviated as the support-side device 30) receives the image via the communication circuit 84 and records the image in the hard disk 86 (step S41).

The support-side device 30 displays the captured image that has been received on the display 92 (step S41). The supporter looks at this captured image that is displayed on the display 92, and recognizes a situation of the site where the worker is present.

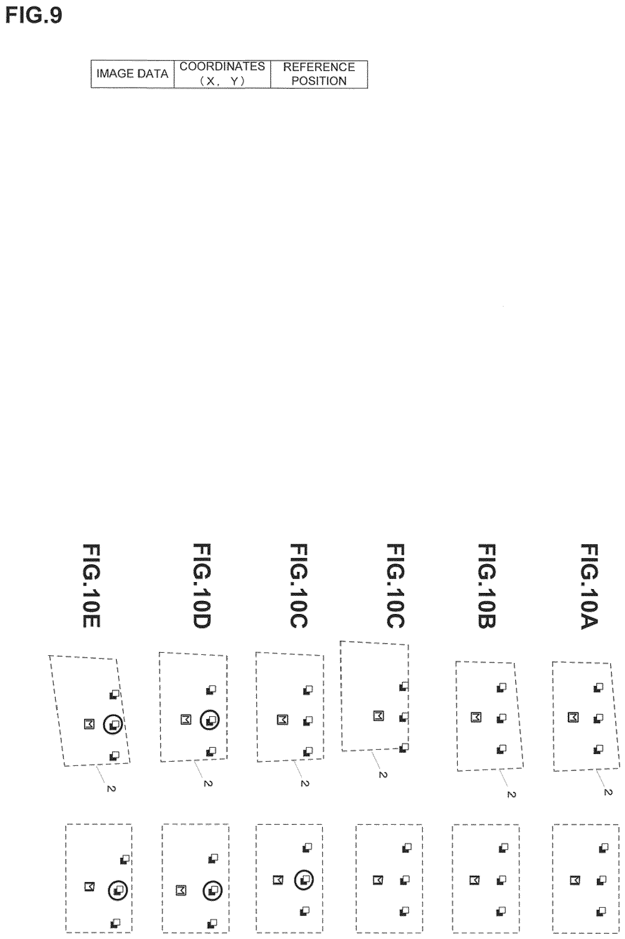

A drawing on a left side in FIG. 10A shows the situation of the site, and a drawing on a right side in FIG. 10A shows a screen of the display 92 on the supporter side. In FIG. 10A, each of broken lines indicates a projection area (= a captured area) 2.

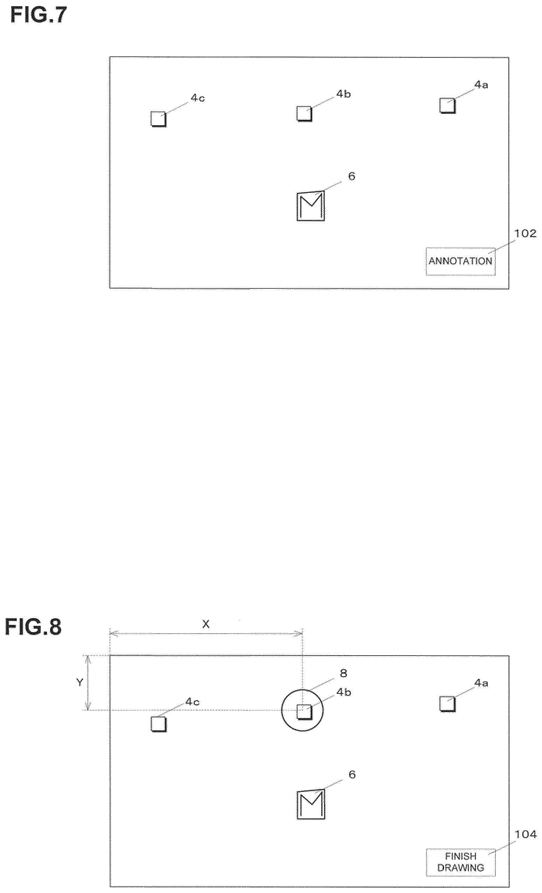

FIG. 7 shows the screen of the display 92, which is shown on the right side in FIG. 10A, in detail. In addition to the switches 4a, 4b, 4c on the equipment, the marker 6 is displayed. The size of this marker 6 is known. Note that the marker 6 may be adhered to the equipment in advance or may be adhered thereto by the worker upon a visit.

Next, while looking at the captured image that is displayed on the display 92, the supporter supports the worker by using the microphone/speaker 93. At this time, because it is difficult to provide the appropriate support by voice only, an annotation is directly displayed onto the equipment on the worker side as will be described below.

For example, it is assumed that the supporter looks at the display 92 and wishes to provide the worker with the support of turning on the switch 4b on the equipment. In this case, the supporter operates the keyboard/mouse 90 and clicks a support initiation button 102 in FIG. 7. In this way, the support-side device 30 displays the captured image that is displayed at a time point that the support initiation button 102 is clicked as a still image. More specifically, as shown on the right side in FIG. 10B, the captured image that is displayed in real time is displayed as the still image at the time point that the support initiation button 102 is clicked.

Accordingly, even when the worker moves his/her head or makes a movement and thereby the captured area 2 is changed, as shown in FIG. 10C, what appears on the display 92 on the supporter side is fixed.

Furthermore, the communication circuit 84 in the support-side device 30 sends a signal that the support annotation is initiated to the wearable computer 52 (step S43). When receiving this signal, the wearable computer 52 records the image that is captured at the time point as a reference captured image in the non-volatile memory 66 (step S2). That is, the same image as the captured image that is displayed on the support-side device 30 for the annotation input is recorded as the reference captured image.

While looking at the display 92 in the support-side device 30, the supporter operates the keyboard/mouse 90 and, as shown in FIG. 8, draws an annotation 8 (a circle herein) around the switch 4b. When the supporter finishes drawing the annotation 8, the supporter clicks a drawing finish button 104 (step S44) (see a drawing on the right side in FIG. 10C). In response to this, the support-side device 30 sends an image and a coordinate position of the annotation 8 to the wearable computer 52 (step S45).

FIG. 9 shows a data structure of data to be sent. Image data is actual data of the annotation 8. Here, the image data is a circle image data. In the case of the circle, the image data may be represented by data that includes a radius, a line type, and the like of the circle. Coordinates are coordinates at a reference position of the image. In the case where a center of the circle is set as the reference position, as shown in FIG. 8, the coordinates are represented by distances X, Y from an upper left corner of the screen. As the reference position, the center of the circle, coordinates of the upper left corner, or the like can be used.

The wearable computer 52 receives this data and estimates a position and the size of the sent annotation image on the basis of the marker 6 in the reference captured image, which is recorded in step S2 (step S3). That is, the wearable computer 52 determines that the annotation 8 exists around the switch 4b on the reference captured image shown in FIG. 8 (determines the position where the annotation 8 should be from a relationship thereof with the marker 6).

Next, the wearable computer 52 corrects the support image on the basis of the currently captured image such that the annotation 8 is correctly displayed at the determined position (around the switch 4b) (step S5).

Correction processing of the support image will be described below. FIG. 8 shows the annotation 8 in the reference captured image. This reference captured image is captured to have the captured area 2 as shown on the right side in FIG. 10B.

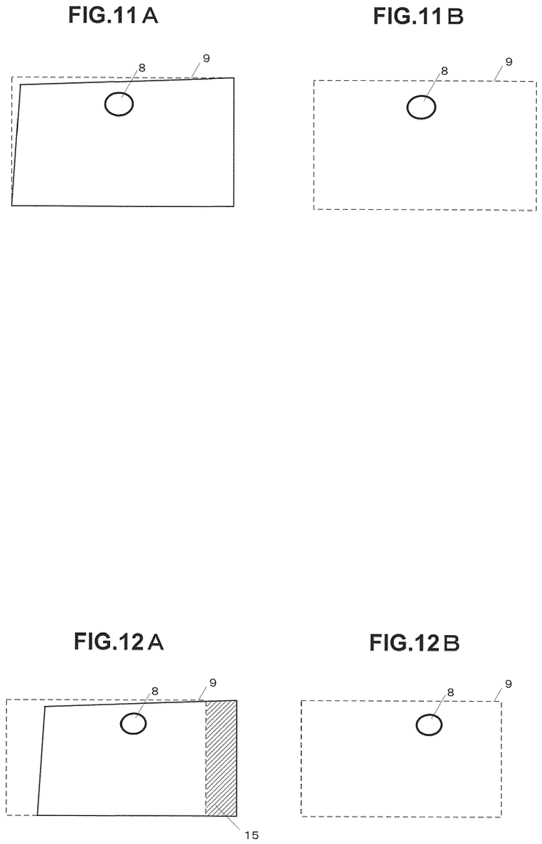

If the laser projector 12 and the camera 13 are fixed, an angle and a distance between the laser projector 12 (the camera 13) and the marker 6 may be calculated from the marker image included in the reference captured image so as to correct the annotation image as shown in FIG. 11A. In FIG. 11A, a projection image area 9 that can be received by the laser projector 12 is indicated by a broken line. An outer frame of the corrected support image is indicated by a solid line. The rectangular support image is deformed and corrected as indicated by the solid line. In FIG. 11A, an upper left corner of the support image is shrunk in the horizontal direction and the vertical direction. Such deformation corresponds to the captured area 2 on the right side in FIG. 10B. In conjunction with this, the image of the annotation 8 is also deformed and acquires an oval shape. The corrected annotation image is as shown in FIG. 11B.

When the laser projector 12 projects the corrected annotation image, the annotation 8 is displayed in the intended shape (the circle) at the correct position (around the switch 4b). Note that, in the case where the laser projector 12 is used, the laser projector 12 only projects the image onto a part corresponding to the annotation image and does not project the image onto the other parts. Thus, the annotation 8 can be displayed without a sense of discomfort.

In the case where the laser projector 12 and the camera 13 are fixed, only the above correction has to be made. However, in this embodiment, the laser projector 12 and the camera 13 are attached to the worker, and positions thereof are changed in real time. Accordingly, depending on a relationship with the worker, while the annotation 8 is correctly displayed (for example, the annotation 8 is constantly displayed right in front of the worker), the annotation 8 may not be displayed around the switch 4b.

In view of this, in this embodiment, the annotation image is corrected on the basis of the marker image included in the latest captured image such that the annotation image is stably displayed on a portion where the annotation image should be displayed even when the worker moves. For example, in the case where the worker moves to the left side, as shown in FIG. 12A, the annotation image is corrected by removing a right portion 15 thereof. Thus, the corrected annotation image is as shown in FIG. 12B. In this way, regardless of motion of the worker, the annotation 8 is displayed around the switch 4b.

Note that, also in the case where the distance or the angle from the worker is changed, the annotation can be displayed in the correct shape at the correct position by correcting the annotation image in a similar manner.

The wearable computer 52 causes the laser projector 12 to project the annotation image, which is corrected just as described (step S6). In this way, the annotation 8 is displayed in the intended shape at the intended position.

The annotation 8 can stably be displayed by repeating the processing that has been described so far. Note that the wearable computer 52 does not have to execute the processing in steps S2, S3 until the support-side device 30 newly sends the initiation of the support annotation.

### 1.4 Other Examples

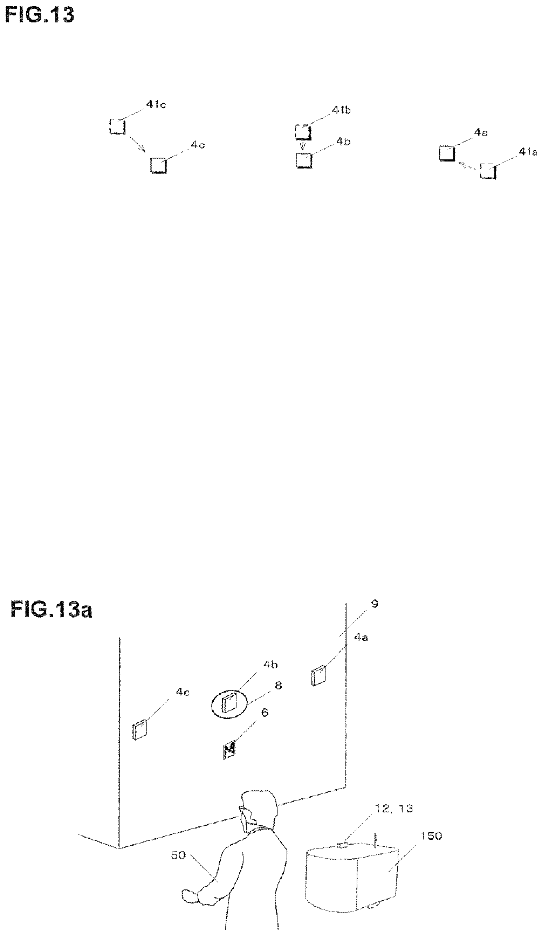

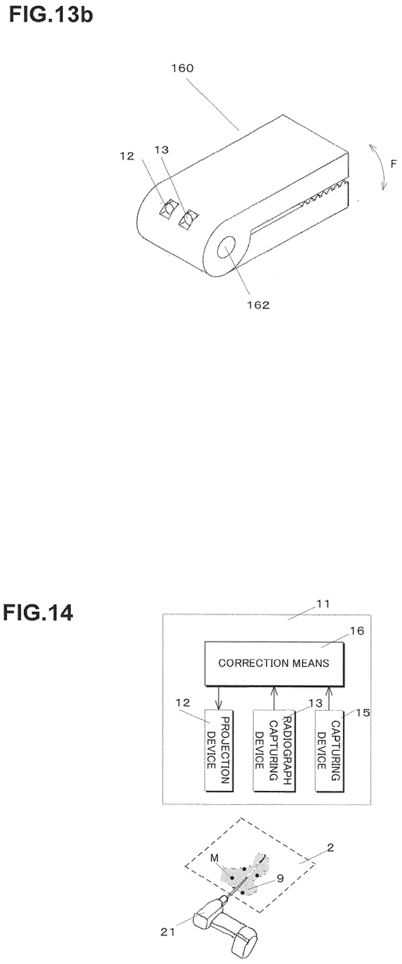

(1) In the above embodiment, the positional relationship between the laser projector 12 (the camera 13) and the projection target (the marker 6) is estimated by using the captured image of the marker 6. However, instead of using the marker 6, the positional relationship between the laser projector 12 (the camera 13) and the projection target may be estimated by measuring a distance between each of the characteristic points in the image and the laser projector 12 (the camera 13) by a depth sensor, a distance sensor, or the like. Alternatively, the distance between each of the characteristic points in the image and the laser projector 12 (the camera 13) is measured by the depth sensor, the distance sensor, or the like, and movement of each of the characteristic points is determined by an optical flow or the like. In this way, the positional relationship may be estimated.
   An image of the characteristic points at the work site may be stored in the non-volatile memory 66 in advance (or may be recorded in the support-side device 30 for download), and this image may be displayed by the laser projector 12. FIG. 13 includes images 41a, 41b, 41c of the switches (the images of the characteristic points) that are displayed at the work site, just as described. The image 41a is an image of the switch 4a, the image 41b is an image of the switch 4b, and the image 41c is an image of the switch 4c.
   As shown in FIG. 13, the projected images 41a, 41b, 41c are offset from the actual switches 4a, 4b, 4c. The worker operates a touch panel (not shown) in the wearable computer 52, moves (drags) each of the images 41a, 41b, 41c in an arrow direction, and changes the size thereof (by pinching) so as to make the images 41a, 41b, 41c match the actual switches 4a, 4b, 4c.
   The wearable computer 52 estimates the positional relationship between the laser projector 12(the camera 13) and the projection target on the basis of initial set values (the direction, the angle, and the like) of the image and the above operation amount. Also, in this case, the marker 6 does not have to be used.
   Furthermore, an acceleration sensor may be provided near the camera 13, and the positional relationship may be corrected on the basis of output of this acceleration sensor.
(2) In the above embodiment, the figure is projected as the annotation. However, a character or the like may be projected as the annotation.
(3) In the above embodiment, the marker 6 that has the plural characteristic points is used. However, the plural markers 6, each of which has the single characteristic point (a simple circle or the like), may be used. In this case, each of the markers 6 is placed at a predetermined position.
(4) In the above embodiment, the laser projector 12 is used. However, a normal projector may be used.
(5) In the above embodiment, the correction means 16 estimates the positional relationship between the laser projector 12 and the projection target and corrects the support image on the basis of this estimated positional relationship. However, the correction means 16 may make the correction as follows. The captured image of the marker 6 is also projected by the Projection device 12, and the images (the support image and the image of the marker 6) projected by the Projection device 12 are corrected such that the projected image of the marker 6 matches the actual marker 6 (can be configured by the image captured by the Capturing device 13).
(6) In the above embodiment, the support image is displayed on one of the switches 4 as a target. However, the target on which the support image is displayed can be selected arbitrarily as long as the target is a portion that requires the support. Examples of the target include an indicator and a connector.
(7) In the above embodiment, the support image is projected even when a person is present in an irradiation direction of the support image. However, in the case where the person is present in a direction in which the camera 13 captures the image, it may be controlled such that laser is not irradiated in a direction of the person. In the case where accurate control is possible, eye positions of the person may be recognized so that the laser is not irradiated in a direction of the eyes.
(8) In the above embodiment, the laser projector 12 and the camera 13 are fixed to the neck of the person. However, the laser projector 12 and the camera 13 may be fixed to another part of a human body such as a wrist or a head. Alternatively, the laser projector 12 and the camera 13 may be fixed to the part of the human body via an apparatus such as glasses, a belt, or a necklace.
   For example, as shown in FIG. 13b, a unit 160 that includes the laser projector 12 and the camera 13 may be provided. This unit 160 is configured so that a rear end thereof is opened in an F direction with a shaft 162 being a center. The unit 160 is urged in a closed direction by urging means such as a spring (not shown) provided on the shaft 162.
   Accordingly, the unit 160 can be clipped to a brim of a hat worn by the worker 50 to fix the laser projector 12 and the camera 13. Each of the laser projector 12 and the camera 13 may communicate with the CPU 60 via a cable or wirelessly.
(9) In the above embodiment, the laser projector 12 and the camera 13 are fixed to the worker 50. However, as shown in FIG. 13a, a robot 150 that moves itself by external control or internal control may be provided with the laser projector 12 and the camera 13 and may display the annotation 8 and the like. In this case, the laser projector 12 and the camera 13 do not have to be fixed to the worker 50.
   Alternatively, instead of the robot 150, the laser projector 12 and the camera 13 may be fixed to movable equipment such as a drone, and the movable equipment may display the annotation 8 and the like.
   Furthermore, the laser projector 12 and the camera 13 may be fixed to an unmovable object such as a column or a wall, and the unmovable object may display the annotation 8 and the like. In this case, a projection direction (a capturing direction) of the laser projector 12 and the camera 13 is preferably controlled.
(10) In the above embodiment, the camera 13 and the laser projector 12 are fixed to the worker. However, the camera 13 and the laser projector 12 may be fixed to a robot, an automobile, the drone, or the like. Alternatively, the camera 13 and the laser projector 12 may be fixed to the unmovable object such as the column.
(11) Each of the above embodiment and the other examples can be applied to the other embodiments unless contrary to the nature thereof.

### 2. Second Embodiment

### 2.1 System Functional Configuration

FIG. 14 shows a functional configuration of a navigation system according to a second embodiment of the invention. A description will herein be made on a case where navigation is provided when a surgeon or the like performs a surgical operation.

A radiograph Capturing device 13 is a radiograph capturing device as an invisible light image Capturing device. As the invisible light image Capturing device, instead of the radiograph capturing device, a PET device, a SPECT device, or the like can be used.

This radiograph capturing device 13 captures a radiograph of an affected area of a patient as a surgical target.

Note that, in this embodiment, plural markers M (markers such as metal markers that are identifiable by the radiograph) are adhered to the affected area of the patent. In the drawing, the captured area 2 is indicated by a broken line.

The Projection device 12 projects the radiograph that is captured by the radiograph Capturing device 13 onto the projection area 2 (that overlaps with the captured area 2). For example, in the case where the captured area 2 is a joint of the patient, the markers M captured in the radiograph of the joint are projected.

A Capturing device 15 is a normal camera as a visible light image Capturing device. The Capturing device 15 captures an image of both of the radiograph of the markers M, which is projected by the Projection device 12, and the actual markers M.

The correction means 16 corrects a projection image provided to the Projection device 12 on the basis of the image captured by the Capturing device 15 such that images of the plural projected markers M match the plural markers M that are adhered to the affected area. When the images of markers M match the markers M, just as described, the radiograph that is projected onto the affected area matches and is displayed at a position of a bone. In addition, a position of a surgical instrument 21 (for example, a surgical drill) that is inserted in the bone is also displayed at a corresponding position in the radiograph.

When the patient moves and thereby the affected area moves, the markers M also move. As a result, the images of the markers M in the radiograph captured by the radiograph Capturing device 13 are changed. The correction means 16 corrects the projection image on the basis of estimated positional relationships such that the images of the markers M match the markers M. In this way, even when the affected area moves, the radiograph can be displayed at a position corresponding to the position of the bone by following the movement.

Therefore, the surgeon can correctly grasp a relationship between the bone and the surgical instrument 21 from this radiograph and thus can accurately perform the surgical operation.

### 2.2 External Appearance and Hardware Configuration

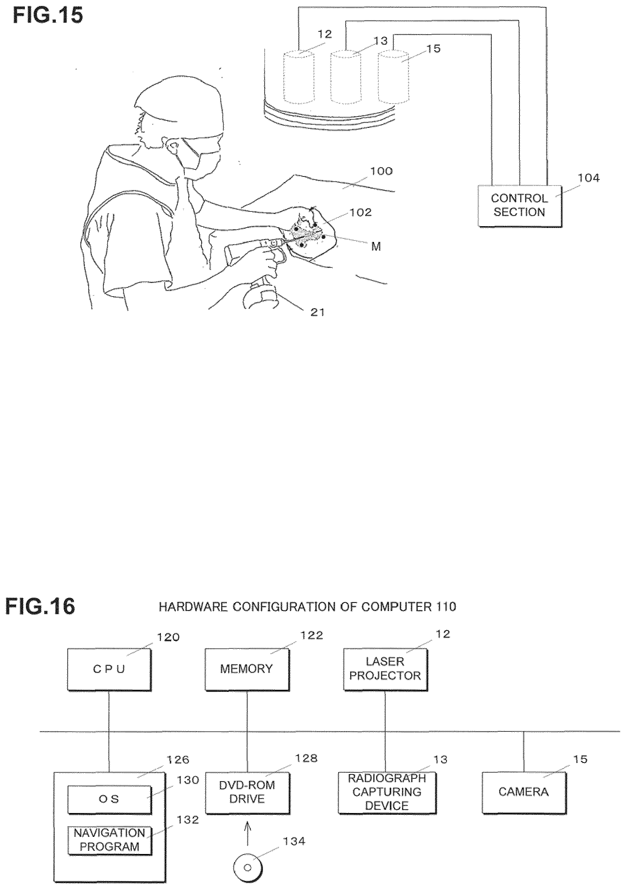

FIG. 15 shows a state where a surgery support system 11 is used by the surgeon. The patient lies on an operating table and is covered with a drape 100. An opening 102 is provided in a part of the drape 100, and the affected area is visible therefrom. A radiograph capturing device 13 is provided to capture a radiograph of this affected area. In addition, the laser projector 12 that projects an image onto the affected area is provided at substantially the same position and faces the same direction as the radiograph capturing device 13. Furthermore, a normal camera 15 is provided. Note that the normal camera 15 is at least required to be able to capture the affected area, is preferably provided at the same position and in the same direction as the radiograph capturing device 13 and the laser projector 12.

A control section 104 receives the radiograph from the radiograph capturing device 13, corrects the radiograph on the basis of an image captured by the camera 15, and causes the laser projector 12 to project the corrected radiograph.

The surgeon can drill a necessary hole for the surgical operation at a correct position on the basis of the radiograph of the affected area projected onto the affected area and a radiograph of a tip of the surgical drill.

FIG. 16 shows a hardware configuration in the case where a computer 110 constitutes the control section 104. Memory 122, a hard disk 126, a DVD-ROM drive 128, the laser projector 12, the radiograph capturing device 13, and the camera 15 are connected to a CPU 120.

The hard disk 126 stores an operating system 130 and a navigation program 132. The navigation program 132 exerts its function in cooperation with the operating system 130. These programs are recorded in a DVD-ROM 134 and are installed therefrom in the hard disk 126 via the DVD-ROM drive 128.

### 2.3 Support Processing

When the surgical operation or procedures are performed, the plural markers M are adhered to the affected area of the patient who lies on the operating table 100 as shown in FIG. 15. For example, in the case where a surgical operation is performed on a femur, the markers M are adhered to skin near the femur. In this embodiment, as each of the markers M, a material (ceramic or the like) that can be recognized as another portion in the radiograph is used. Also, in this embodiment, differing from the first embodiment, the plural characteristic points are not recognizable as each of the markers M, but all of the markers M are recognized as the single characteristic point as a whole. Thus, it is necessary to use the plural (at least three) markers M.

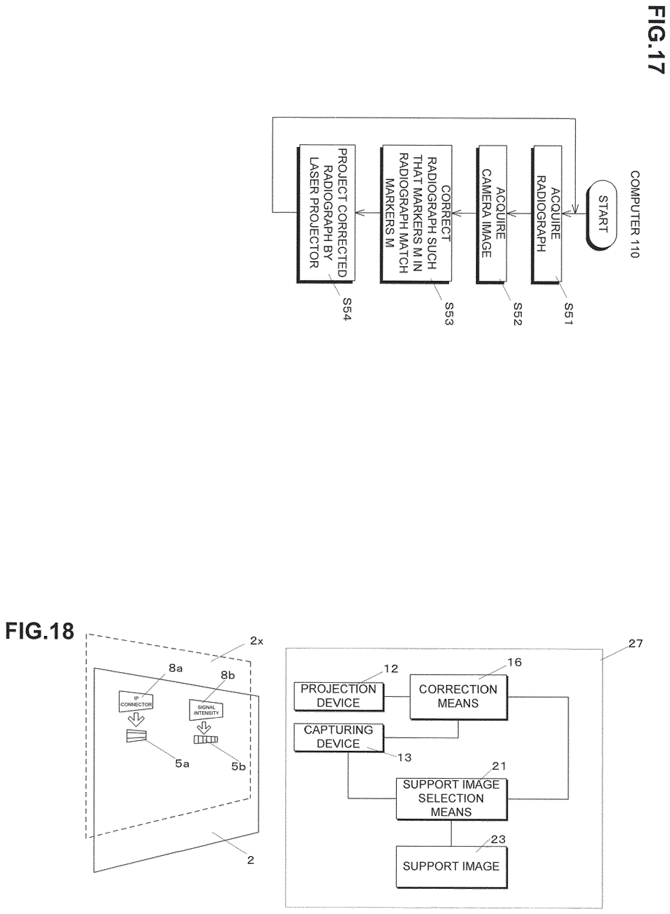

FIG. 17 is a flowchart of the navigation program 132. The CPU 120 in the computer 110 (hereinafter may be abbreviated as the computer 110) acquires the radiograph of the affected area that is captured by the radiograph capturing device 13 (step S51). The computer 110 also acquires the image of the affected area that is captured by the camera 15 (step S52).

The computer 110 causes the laser projector 12 to project this radiograph onto the affected area (step S54). This radiograph includes not only the radiograph of the bone in affected area but also includes the images of the markers M.

However, the images of the markers M are displayed at different positions from those of the actual markers M that are adhered to the affected area. Thus, the computer 110 refers to the camera image that corresponds to the radiograph and executes control such that the images of the markers M match the actual markers M. That is, the radiograph is corrected such that the plural markers M in the projected radiograph match the actual markers M that correspond thereto and are adhered to the affected area (step S53). In this way, a position of the bone in the radiograph can correspond to a position of the actual bone.

Once the markers M in the radiograph can match the actual markers M, the radiograph is corrected thereafter by using a correction parameter at this time even when the affected area moves, and the positions of the markers M in the radiograph match the positions of the actual markers M. Needless to say, in the case where the markers M in the radiograph are offset, the correction only has to be made again.

As it has been described so far, the radiograph is displayed on the skin of the affected area in such a manner as to match the position of the bone. Accordingly, the surgeon can perform the procedures by using the surgical instrument 21 such as the surgical drill and the like while checking the position of the bone by looking at this radiograph. In addition, because a drill part at the tip of the surgical instrument 21 is made of metal, this also appears on the radiograph. Thus, it is possible to check whether the hole is drilled in a correct direction at a correct position.

### 2.4 Other Examples

(1) In the above embodiment, the plural markers M are adhered to the affected area, and the projection image is corrected on the basis of the radiograph of these markers M. However, the single marker M (the marker 6 in the first embodiment) that has the plural characteristic points may be used. The projection image is corrected such that positions of the characteristic points of the marker M in the radiograph match positions of the characteristic points of the actual marker M.
   In this case, a pattern of the marker M (for example, a character of M) may be formed of a material that can be distinguished in the radiograph. For example, a substrate of the marker M can be made of plastic (an X-ray permeable material), and the pattern thereof can be made of ceramic (an X-ray impermeable material). Alternatively, the substrate of the marker M can be made of ceramic (the X-ray impermeable material), and the pattern thereof can be made of plastic (the X-ray permeable material).
(2) In the above embodiment, the description has been made on the case where the radiograph is used. However, the invention can also be applied in the same manner when a PET image or a SPECT image is used. In this case, a material that can be distinguishable in the PET image, the SPECT image, or the like is used for each of the markers M.
(3) In the above embodiment, the camera 15 is separately provided from the radiograph capturing device 13. However, the radiograph may be corrected without providing the camera 15.
   In this case, similar to the first embodiment, a marker whose characteristic points are known is arranged, or plural markers are arranged at specified intervals and positions. In this way, a positional relationship between the laser projector 12 and the affected area is estimated on the basis of the radiograph, and the radiograph can be corrected on the basis of the estimated positional relationship such that the radiograph is displayed on the skin of the affected area in such a manner as to match the position of the bone.
(4) In the above embodiment, the camera 13 and the laser projector 12 are fixed to the worker. However, the camera 13 and the laser projector 12 may be fixed to a robot, an automobile, the drone, or the like. Alternatively, the camera 13 and the laser projector 12 may be fixed to the unmovable object such as the column.
(5) In the above embodiment, positioning is performed by correcting the projection image. However, positioning may be performed by moving (moving the direction, the position, or the like of) only one of the laser projector 12 and the radiograph capturing device 13. In this case, positioning may be performed automatically or manually.
(6) Each of the above embodiment and the other examples can be applied to the other embodiments unless contrary to the nature thereof.

### 3. Third Embodiment

### 3.1 System Functional Configuration

FIG. 18 shows a functional configuration of a navigation system 27 according to a third embodiment of the invention. A projection target 2 is a panel of the equipment, for example. In an example shown in FIG. 18, the panel of the equipment as the projection target 2 is provided with a connector 5a, an LED indicator 5b, and the like. In this embodiment, a marker is not provided. A description will herein be made on an operation in the case where the worker is provided with explanations of the connector and the like on the panel.

The Projection device 12 is the laser projector or the like that is attached to the head of the worker, for example, and projects an image onto the projection target 2. Here, annotations 8a, 8b that respectively provide explanations of the connector 5a and the LED indicator 5b are projected. The Capturing device 13 is attached to the same position and in the same direction as this Projection device 12. Accordingly, the Capturing device 13 captures an image of the projection target 2 of the Projection device 12. Note that, in this embodiment, the normal camera is used as the Capturing device 13.

In the navigation system 27, in a corresponding manner to an image of each of the connector 5a, the LED indicator 5b, and the like (an image thereof seen from the front), the image and the explanation thereof are recorded in advance as a support image 23.

Support image selection means 21 finds a part of the captured image of the panel that matches each of the images of the connector 5a, the LED indicator 5b, and the like recorded in advance. Furthermore, the support image selection means 21 retrieves the support image 23 (the image and the explanations) that corresponds to the found part of the image and provides the support image 23 to the correction means 16.

The correction means 16 corrects the support image 23 such that the image projected by the Projection device 12 (for example, the image of the connector 5a) is displayed in such a manner as to match an actual element (for example, the connector 5a) on the panel.

In this way, the explanations 8a, 8b in the support image 23 are displayed at correct positions in relation to the connector 5a and the LED indicator 5b etc.

Just as described, the explanations of the elements, which are on the panel and are looked at by the worker, can stably be displayed in such a manner as to correspond to the elements regardless of the movement of the worker.

### 3.2 External Appearance and Hardware Configuration

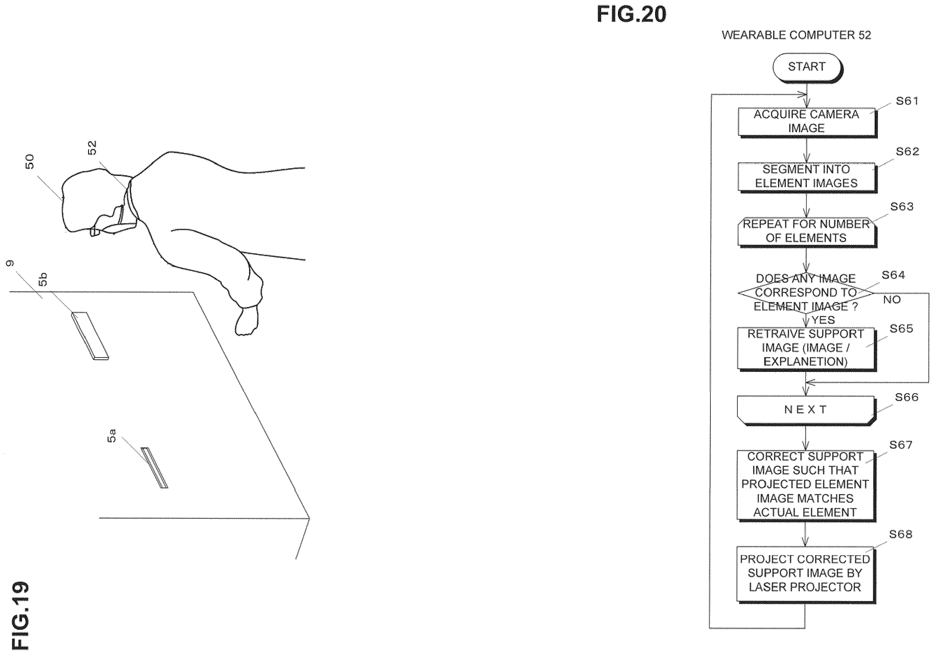

FIG. 19 shows the worker 50 who wears the wearable computer 52 as the work-side device. When the worker 50 arrives in front of the equipment 9 as the target of the work such as the repair or maintenance thereof, the worker 50 wears the wearable computer 52 on his/her neck.

The external appearance of the wearable computer 52 is as shown in FIG. 3. In addition, the hardware configuration thereof is as shown in FIG. 4. Note that a support program 71 is recorded in the non-volatile memory 66.

### 3.3 Support Processing

FIG. 20 is a flowchart of the support program 71. The CPU 60 in the wearable computer 52 (hereinafter may be abbreviated as the wearable computer 52) acquires the image captured by the camera 13 (step S61). The wearable computer 52 binarizes and clusters this camera image and then segments the camera image into element images (step S62). Thus, the element image of a switch, the connector, the indicator, a knob, a button, or the like provided on the panel can be extracted from the camera image.

Next, the wearable computer 52 determines whether the extracted element image matches any of the images recorded in advance (step S64).

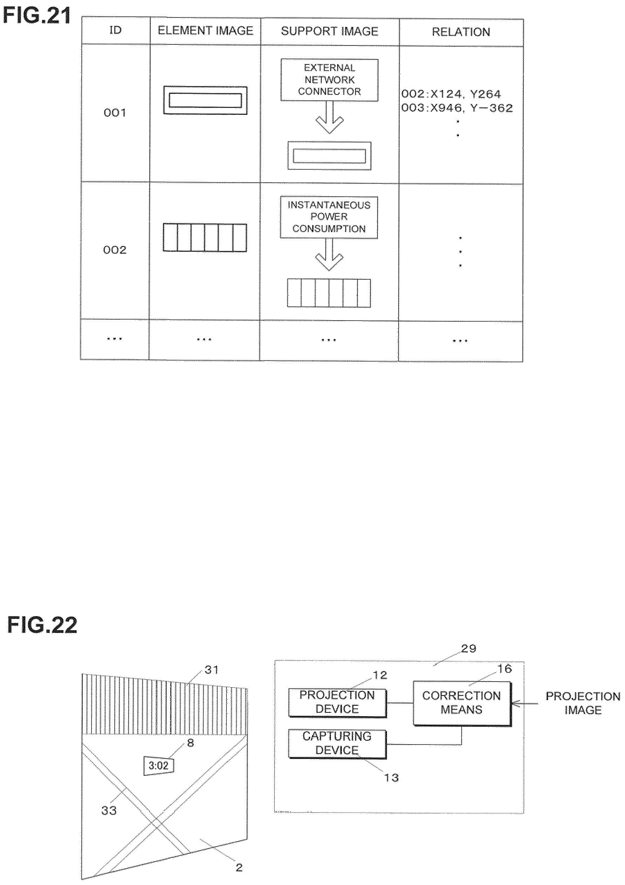

As shown in FIG. 21, the images of the several elements, which are provided on the panel of the equipment, are recorded in advance in the non-volatile memory 66 of the wearable computer 52. If the corresponding element image is not found, the wearable computer 52 repeats the same processing for the next extracted element image.

If the corresponding element image is found, the wearable computer 52 retrieves the support image that is recorded in such a manner as to correspond to the corresponding element image (step S65). In this embodiment, the support image includes not only the image of the explanation of the element but also the element image itself. This is because the support element is positioned by projecting the element image.

The processing that has been described so far is repeated. In the case where the element image that corresponds to the extracted element image is available, the support image is retrieved. Once completing the processing for all of the extracted element images, the wearable computer 52 aggregates the retrieved support images of the elements into the single support image. At this time, the retrieved support images are aggregated on the basis of data on positional relationships of each of the element images with the other element images (item name "RELATION"), and the positional relationships of each of the element images are recorded in such a manner as to correspond to each of the support images. In the item of "RELATION", a relationship between a representative point of an adjacent element image (the characteristic point at a lower right corner, for example) and a representative image of the element image is indicated by coordinates. Accordingly, the plural support images are aggregated into the single support image on the basis of these coordinates.

Next, the wearable computer 52 causes the laser projector 12 to project the support image, which is generated just as described (step S68). The projected support image includes the element images of the connector and the like. These element images are displayed in such a manner as to be offset from the actual elements (the connector and the like).

Accordingly, the wearable computer 52 corrects the support image such that the projected element images match the actual elements (step S67). In this way, each of the images of the explanations included in the support image is correctly displayed in terms of the relationship thereof with the actual element.

In addition, even when the worker moves or his/her head moves, the support image is fixed and displayed at the correct position.

### 3.4 Other Examples

(1) In the above embodiment, the support images (the explanation images) are simultaneously displayed for the plural elements. However, the support image (the explanation image) may only be displayed for a certain element that is located closest to the center of the camera image. In this case, it is not necessary to aggregate the support images into the single support image.
(2) In the above embodiment, the camera 13 and the laser projector 12 are fixed to the worker. However, the camera 13 and the laser projector 12 may be fixed to the robot, the automobile, or the like. Alternatively, the camera 13 and the laser projector 12 may be fixed to the unmovable object such as the column.
(3) In the above embodiment, the support image is positioned without using the marker or the characteristic point. However, as described in the first embodiment and the second embodiment, the support image may be positioned by using the marker.
(4) Each of the above embodiment and the other examples can be applied to the other embodiments unless contrary to the nature thereof.

### 4. Fourth Embodiment

### 4.1 System Functional Configuration

FIG. 22 shows a functional configuration of a display system 29 according to a fourth embodiment of the invention. The Capturing device 13 captures an image of the projection target 2. The projection target 2 has irregularities formed by columns 33, and a patterned portion 31 is provided in an upper portion of the projection target 2. The correction means 16 finds a flat non-patterned portion on the basis of the captured image. Furthermore, the correction means 16 corrects projection image data such that a projection image is displayed in the flat non-patterned portion. Then, the Projection device 12 projects the corrected projection image data.

In this way, the annotation 8 as the projection image is displayed in the flat non-patterned portion. When the projection image data is corrected, just as described, the annotation 8 can be displayed at a position at which visibility of the annotation 8 is improved.

### 4.2 External Appearance and Hardware Configuration

The external configuration of the wearable computer 52 is as illustrated in FIG. 3. In addition, the hardware configuration thereof is as shown in FIG. 4. Note that a display program 73 is recorded in the non-volatile memory 66.

### 4.3 Display Processing

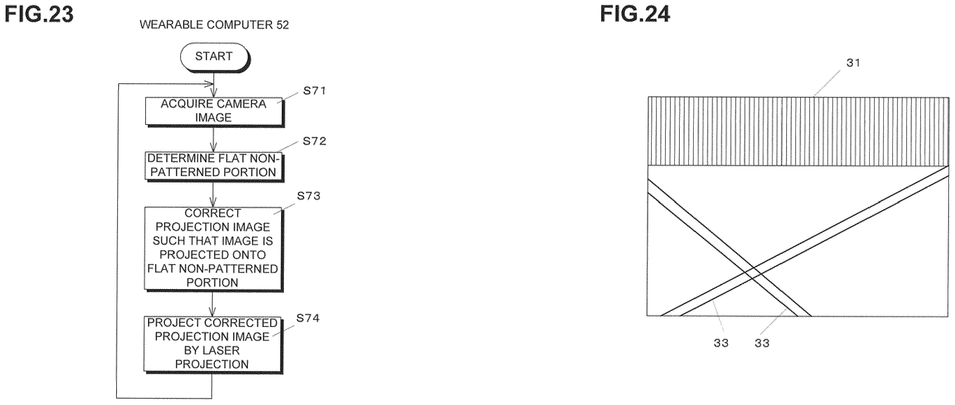

FIG. 23 is a flowchart of the display program 73. The CPU 60 in the wearable computer 52 (hereinafter may be referred to as the wearable computer 52) acquires the image captured by the camera 13 (step S71). Next, the CPU 60 determines the flat non-patterned portion on the basis of the captured image (step S72). For example, this flat non-patterned portion can be determined by selecting a portion with uniform contrast or a portion with uniform tone density.

For example, as illustrated in FIG. 24, the projection target 2 has: projections formed by the columns 33; and the patterned portion 31. Since a shadow is made in a boundary portion of each of the columns 33, the tone density of the boundary portion is not uniform. The tone density of the patterned portion 31 is not uniform, either. Accordingly, a portion of the projection target 2 other than these portions is set as the flat non-patterned portion. Note that, in the case where both of a portion that is exposed to the sun and a portion that is not exposed to the sun are present in the flat non-patterned portion, these portions are recognized as different portions from the flat non-patterned portion.

The wearable computer 52 determines an area that is closest to a center of a projection range in the flat non-patterned portion as a projection area for the projection image. Then, the wearable computer 52 corrects the projection image data such that the projection image 8 is projected onto the determined area (step S73). The projection image data that is corrected just as described is projected by the laser projector 12 (step S74).

### 4.4 Other Examples

(1) In the above embodiment, the marker is not used. However, the projection image data may be corrected by using the captured image of the marker.
(2) In the above embodiment, the projection image is displayed in the flat non-patterned portion. In addition to this or instead of this, it may be controlled such that the projection image is displayed in a colored area where a color(s) of the projection image is distinguishable (for example, a colored area in a color complementary relationship with that of the projection image). In addition, in the cases where the color of the area onto which the projection image should be displayed is acquired from the camera image, and the color of the area and the color of the projection image are similar to each other and are thus difficult to be distinguished from each other, the color of the projection image may be corrected to a color that can easily be distinguished.
(3) Each of the above embodiment and the other examples can be applied to the other embodiments unless contrary to the nature thereof.

## Claims

1. A remote work support system comprising:
a support-side device; and
a work-side device, wherein
the work-side device includes:
a Capturing device that is attached to a movable object or a fixed object, captures an image of a work target area, and generates a captured image;
captured image sending means that causes a sending section to send the captured image to the support-side device;
a Projection device that is attached to the movable object or the fixed object and projects a support image onto the work target area on the basis of provided support image data; and
correction means that corrects the support image data on the basis of one of or both of an image of a marker provided in the work target area and a characteristic point of the work target area included in the captured image such that the support image is displayed with a specified portion of the work target area being a reference, the image of the marker being included in the captured image, and
the support-side device includes:
captured image reception means that causes a reception section to receive the sent captured image;
a CAPTURED IMAGE DISPLAY DEVICE that displays the received captured image;
a SUPPORT IMAGE INPUT DEVICE that inputs the support image at a desired position in the work target area on the captured image displayed in the CAPTURED IMAGE DISPLAY DEVICE; and
support image sending means that causes a sending section to send the support image data, the position of which on the captured image is identified, to the work-side device.

2. A work-side device for a remote work support system, the work-side device comprising:
a Capturing device that is attached to a movable object or a fixed object, captures an image of a work target area, and generates a captured image;
captured image sending means that causes a sending section to send the captured image to a support-side device;
a Projection device that is attached to the movable object or the fixed object and projects a support image onto the work target area on the basis of provided support image data; and
correction means that corrects the support image data on the basis of one of or both of an image of a marker provided in the work target area and a characteristic point of the work target area included in the captured image such that the support image is displayed with a specified portion of the work target area being a reference, the image of the marker being included in the captured image.

3. A work-side program used to realize a work-side device for a remote work support system by a computer,
the remote work support system having: a Capturing device that is attached to a movable object or a fixed object, captures an image of a work target area, and generates a captured image; and a Projection device that is attached to the movable object or the fixed object and projects a support image onto the work target area on the basis of provided support image data, wherein
the work-side program causes the computer to function as:
captured image sending means that causes a sending section to send the captured image to a support-side device; and
correction means that corrects the support image data on the basis of an image of a marker provided in the work target area or a characteristic point of the work target area included in the captured image such that the support image is displayed with a specified portion of the work target area being a reference, the image of the marker being included in the captured image.

4. A support-side device for a remote work support system, the remote work support system having, on a work side: a Capturing device that is attached to a movable object or a fixed object, captures an image of a work target area, and generates a captured image; and a Projection device that is attached to the movable object or the fixed object and projects a support image onto the work target area on the basis of provided support image data, the support-side device comprising:
captured image reception means that causes a reception section to receive the sent captured image;
a CAPTURED IMAGE DISPLAY DEVICE that displays the received captured image;
a SUPPORT IMAGE INPUT DEVICE that inputs the support image at a desired position in the work target area on the captured image displayed in the CAPTURED IMAGE DISPLAY DEVICE; and
support image sending means that causes a sending section to send the support image data, the position of which on the captured image is identified, to a work-side device so that the Projection device projects the support image, which is input by the SUPPORT IMAGE INPUT DEVICE, onto the work target area on the work side.

5. A support-side program used to realize a support-side device for a remote work support system by a computer, the remote work support system having, on a work side: a Capturing device that is attached to a movable object or a fixed object, captures an image of a work target area, and generates a captured image; and a Projection device that is attached to the movable object or the fixed object and projects a support image onto the work target area on the basis of provided support image data, wherein
the support-side program causes the computer to function as:
captured image reception means that causes a reception section to receive the sent captured image;
a SUPPORT IMAGE INPUT DEVICE that inputs the support image at a desired position in the work target area on the captured image displayed in the CAPTURED IMAGE DISPLAY DEVICE; and
support image sending means that causes a sending section to send the support image data, the position of which on the captured image is identified, to a work-side device so that the Projection device projects the support image, which is input by the SUPPORT IMAGE INPUT DEVICE, onto the work target area on the work side.

6. The system, the device, or the program according to any one of claims 1 to 5, wherein
the correction means includes estimation means that estimates a positional relationship between the Projection device and either one of the marker and the characteristic point on the basis of the captured image of the marker or the characteristic point of the work target area, and corrects the support image data or the projection image data on the basis of said estimated positional relationship.

7. The system, the device, or the program according to any one of claims 1 to 6, wherein
the Projection device projects the captured image of the marker or the characteristic point in addition to the support image, and
the correction means correct the support image data or the projection image data such that a projection image of the marker matches the actual marker or that a projection image of the characteristic point of the work target area matches the actual characteristic point.

8. The system, the device, or the program according to any one of claims 1 to 7, further comprising:
support image selection means that retrieves the support image and provides the support image to the correction means, the support image being recorded in such a manner as to correspond to an element image included in the captured image.

9. The system, the device, or the program according to any one of claims 1 to 8, wherein
the movable object is a part of a body of a user.

10. A surgery support system comprising:
a Projection device that projects an invisible light image onto a surgical site on the basis of provided invisible light image data showing inside of a body of a patient, the invisible light image showing the inside of the body of the patient;
an invisible light image Capturing device that irradiates the surgical site with light other than visible light, captures an image of the surgical site, and generates the invisible light image that includes an invisible light image of a marker provided at the surgical site;
a visible light image Capturing device that captures an image of the surgical site by the visible light and generates a visible light image at least including the marker projected by the Projection device and the actual marker provided at the surgical site; and
correction means that corrects the invisible light image data on the basis of the visible light image such that, even when a positional relationship between the surgical site and the Projection device is changed in real time, the invisible light image of the inside of the body is displayed in such a manner as to match a position in the body at the surgical site.

11. A surgery support program used to realize a surgery support system by a computer, the surgery support system including: a Projection device that projects an invisible light image onto a surgical site on the basis of provided invisible light image data showing inside of a body of a patient, the invisible light image showing the inside of the body of the patient; an invisible light image Capturing device that irradiates the surgical site with light other than visible light, captures an image of the surgical site, and generates the invisible light image that includes an invisible light image of a marker provided at the surgical site; and a visible light image Capturing device that captures an image of the surgical site by the visible light and generates a visible light image at least including the marker projected by the Projection device and the actual marker provided at the surgical site, wherein
the surgery support program causes the computer to function as:
correction means that corrects the invisible light image data on the basis of the visible light image such that, even when a positional relationship between the surgical site and the Projection device is changed in real time, the invisible light image of the inside of the body is displayed in such a manner as to match a position in the body at the surgical site.

12. The system or the program according to any one of claims 10 to 11, wherein
the invisible light image is any one of a radiograph, a PET image, or a SPECT image, and
the visible light image is a normal camera image.

13. A display system comprising:
a Capturing device that is attached to a movable object or a fixed object, captures an image of a projection target, and generates a captured image;
a Projection device that is attached to the movable object or the fixed object and projects a projection image onto the projection target on the basis of provided projection image data; and
correction means that finds a flat area with slight patterns in the projection target on the basis of the captured image and corrects the projection image data such that the projection image is displayed in said area.

14. A display program used to realize a display system by a computer, the display system including: a Capturing device that is attached to a movable object or a fixed object, captures an image of a projection target, and generates a captured image; and a Projection device that is attached to the movable object or the fixed object and projects a projection image onto the projection target on the basis of provided projection image data, wherein
the display program causes the computer to function as:
correction means that finds a flat area with slight patterns in the projection target on the basis of the captured image and corrects the projection image data such that the projection image is displayed in said area.
